(19) Europäisches Patentamt European Patent Office Office européen des brevets

(11) **EP 2 087 335 B1**

(12) **FASCICULE DE BREVET EUROPEEN**

(45) Date de publication et mention
de la délivrance du brevet:
**14.12.2011 Bulletin 2011/50**

(21) Numéro de dépôt: **07866475.2**

(22) Date de dépôt: **31.10.2007**

(51) Int Cl.:
***G01M 13/04*** *(2006.01)*

(86) Numéro de dépôt international:
**PCT/FR2007/001807**

(87) Numéro de publication internationale:
**WO 2008/056066 (15.05.2008 Gazette 2008/20)**

(54) **DISPOSITIF ET PROCÉDÉ DE SURVEILLANCE DE L'ÉTAT VIBRATOIRE D'UNE MACHINE TOURNANTE**

EINRICHTUNG UND VERFAHREN ZUM ÜBERWACHEN DES VIBRATIONSZUSTANDS EINER SICH DREHENDEN MASCHINE

DEVICE AND METHOD FOR MONITORING THE VIBRATORY CONDITION OF A ROTATING MACHINE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **07.11.2006 FR 0609705**

(43) Date de publication de la demande:
**12.08.2009 Bulletin 2009/33**

(73) Titulaire: **Université De Reims Champagne-Ardenne
51097 Reims Cedex (FR)**

(72) Inventeurs:
• **MARCONNET, Patrick
  51390 Gueux (FR)**
• **POTTIER, Bernard
  51100 Reims (FR)**
• **RASOLOFONDRAIBE, Lanto
  51100 Reims (FR)**

(74) Mandataire: **Debay, Yves
  Cabinet Debay
  126, Elysee 2
  F-78170 La Celle Saint Cloud (FR)**

(56) Documents cités:
**EP-A- 0 060 588    WO-A-83/04436**

EP 2 087 335 B1

**Description**

DOMAINE TECHNIQUE DE L'INVENTION

La présente invention se rapporte au domaine des composants mécaniques des machines tournantes dont les mécanismes de rotation sont sensibles au balourd ou sont susceptibles d'exciter la structure des machines telles que les turbines, les alternateurs, moteurs et réducteurs, etc. et plus particulièrement au domaine des roulements à billes, à aiguilles ou à rouleaux.

ARRIERE-PLAN TECHNOLOGIQUE DE L'INVENTION

Les roulements sont des composants mécaniques qui guident la rotation d'un arbre dans un palier en limitant les frottements qui pourraient être occasionnés par le mouvement d'une des deux pièces par rapport à l'autre. Les roulements sont formés par deux bagues coaxiales, l'une dite intérieure et l'autre extérieure entre lesquelles des éléments mobiles sont placés et maintenus. Ces éléments mobiles, généralement des billes, bien qu'emprisonnés entre les deux bagues coaxiales assurent la rotation d'une des bagues par rapport l'autre.

Dans certains modèles, les billes sont remplacées par des rouleaux cylindriques ou tronconiques. Les roulements sont alors capables de supporter un effort radial supérieur par rapport aux roulements à billes classiques. De même, certains roulements, dits à aiguilles, utilisent des rouleaux de faible diamètre comparé à leur longueur, présentant l'avantage d'être moins encombrant grâce à un espace radial réduit.

Pourtant, même si l'utilisation de roulements réduit les frottements dus à la rotation d'un arbre dans son palier, une fatigue des composants mécaniques va apparaître une fois qu'un certain nombre de rotations est dépassé. Cette détérioration atteint les organes roulants comme les bagues. Elle peut prendre la forme d'une usure naturelle, l'écaillage, d'une corrosion, d'un grippage, d'une abrasion, etc. qui va générer un choc, ou bien prendre la forme d'un déséquilibrage de l'arbre provoquant un balourd. Cette détérioration de l'état du mécanisme se traduit alors par une vibration qui augmente avec l'usure.

Ainsi, il est connu que si l'augmentation des vibrations permet de détecter un défaut, l'analyse des caractéristiques du spectre vibratoire de la machine va permettre d'en identifier la cause et donc de définir le délai avant que le seuil critique ne soit atteint. Suivant le type d'altération du mécanisme, la vibration varie. Le balourd d'un déséquilibrage de l'arbre produit une excitation sinusoïdale tandis que l'écaillage d'une piste d'un roulement va provoquer un choc qui se traduit par une excitation impulsionnelle au passage de chacun des éléments mobiles du roulement sur l'écaille.

Actuellement, la principale méthode pour caractériser et surveiller l'état de chaque composant essentiel d'une machine tournante consiste en l'utilisation de capteurs vibratoires de type accéléro-métriques. Le phénomène utilisé dans ce type de capteur est appelé piézo-électricité. Sous l'action d'une force mécanique, certains corps peuvent se polariser. Pour utiliser cette propriété, les capteurs piézoélectriques présentent la forme d'un risque dont chacune des surfaces est reliée à une électrode. Une pression sur une face du capteur génère une contrainte mécanique qui polarise le capteur. La charge générée est par la suite amplifiée pour pouvoir être mesurée.

Pour pouvoir mesurer les vibrations dues à une détérioration, ces capteurs piézo-électriques sont disposés à proximité des points stratégiques des principaux composants de la machine surveillée. La fréquence des vibrations du roulement se traduit par une fréquence de contrainte/pression à la surface du capteur, transformée sous la forme d'une variation d'un signal électrique mesuré.

Il apparaît que l'utilisation de tels capteurs présente de nombreux inconvénients. En plus de leur coût élevé, ces capteurs ne peuvent pas toujours être positionnés au plus près de la source à l'origine de la vibration éventuelle. Or les vibrations engendrées par les défauts du roulement ont la particularité de se propager dans l'ensemble de la structure de la machine. Ces vibrations peuvent ainsi changer de milieu du fait du changement de la nature des matériaux, ce qui provoque alors des phénomènes de réflexion, de réfraction mais encore de conversion du mode de propagation. Il est donc important pour mesurer correctement les vibrations d'une machine que les capteurs soient positionnés sur des points de mesure optimums. Dans le cas d'une utilisation de capteurs accéléro-métriques ou piézo-électriques, l'accession à ces points de mesure optimum n'est pas toujours possible. Malheureusement, les vibrations sont amorties au fur et à mesure qu'elles s'éloignent de la source qui leur a donné naissance. Le positionnement de ces capteurs à distance de la source des vibrations entraine alors une atténuation importante du signal mesuré.

De plus, il faut noter que ces capteurs vibratoires ont une qualité de mesure qui dépend de la surface contre laquelle ils sont positionnés. Cette surface doit pouvoir transmettre correctement les vibrations mesurées sans qu'il n'y ait de perte d'information.

DESCRIPTION GENERALE DE L'INVENTION

La présente invention a pour objet de fournir un capteur capable de palier un ou plusieurs inconvénients de l'art antérieur tout en améliorant la qualité du signal vibratoire mesuré et en proposant une solution à faible coût.

Cet objectif est atteint par un dispositif de surveillance des vibrations générées par un roulement d'une machine, formé par deux bagues, l'une extérieure et l'autre intérieure, l'une fixe par rapport au bâti d'une machine et l'autre tournante, coaxiales entre lesquelles au moins un élément roulant est emprisonné et susceptible de se déplacer, et des vibrations générées par d'autres organes de la machine qui transitent par ce roulement, chacun des organes de la machine possédant une signature fréquentielle respective, caractérisé en ce que le dispositif comprend au moins un moyen de positionnement non-conducteur, monté serré sur la bague de roulement fixe par rapport au bâti de la machine, le moyen de positionnement non-conducteur comportant au moins un logement formant un moyen de positionnement d'au moins un élément conducteur, constituant une première armature d'un condensateur, à une distance d'une partie conductrice de la bague tournante, formant la seconde armature du condensateur et le moyen de positionnement non-conducteur étant solidaire d'au moins un moyen de cloisonnement, le moyen de cloisonnement permettant de créer entre les deux armatures un espace qui forme un milieu isolant diélectrique et d'assurer l'étanchéité de ce milieu isolant en étant en contact avec une partie de la surface de la bague tournante.

Selon une autre variante de l'invention, le dispositif est caractérisé en ce que le moyen de cloisonnement est formé par une lame métallique solidaire du moyen de positionnement et en contact avec une partie de la surface de la bague tournante.

Selon une autre variante de l'invention, le dispositif est caractérisé en ce que le moyen de cloisonnement est formé par un joint élastique solidaire du moyen de positionnement, le joint élastique présentant une lèvre en contact avec une partie de la surface de la bague tournante.

Selon une variante de l'invention, le dispositif est caractérisé en ce que le moyen de positionnement non-conducteur positionne au moins trois armatures conductrices radialement par rapport à la seconde armature conductrice formée par une partie de la bague tournante du roulement les axes passant respectivement par les positions de chacun des éléments conducteurs et le centre de rotation du roulement forment entre eux des angles d'au plus 120°.

Selon une autre variante de l'invention, le dispositif est caractérisé en ce que les armatures conductrices en vis à vis sont l'une convexe et l'autre concave dans un plan perpendiculaire à l'axe de rotation du roulement.

Selon une autre variante de l'invention, le dispositif est caractérisé en ce que le moyen de positionnement non-conducteur positionne la première armature conductrice axialement par rapport à la seconde armature conductrice formée par une partie de la surface de la bague tournante du roulement.

Selon une autre variante de l'invention, le dispositif est caractérisé en ce que le moyen de positionnement non-conducteur positionne une paire d'armatures conductrices, l'une radialement, l'autre axialement par rapport à l'armature conductrice formée par une partie de la surface de la bague tournante du roulement.

Selon une autre variante de l'invention, le dispositif est caractérisé en ce qu'un seul espace formant le milieu isolant diélectrique est commun à la paire de condensateurs formé par les deux armatures conductrices positionnées par le moyen de positionnement non-conducteur d'une part et l'armature conductrice formée par une partie de la surface de la bague tournante du roulement d'autre part.

Un avantage de l'invention est que le capteur capacitif formé par la paire d'armatures du condensateur peut être disposé à l'intérieur du roulement, c'est-à-dire à l'endroit optimum où l'ensemble des informations vibratoires transitent sans que celles-ci n'aient été amorties.

Un autre avantage de l'invention est que ces capteurs sont positionnés au plus proche des pièces en mouvement permettant d'obtenir un signal de grande qualité avec peu de pertes.

Un autre avantage de l'invention est que ces capteurs capacitifs permettent d'avoir accès d'une part aux efforts radiaux et d'autre part aux efforts axiaux des roulements.

Un autre avantage du dispositif de l'invention se caractérise par son faible encombrement qui lui permet d'être directement intégré à la machine.

Un autre avantage apporté par l'invention est le faible coût de sa mise en oeuvre. Ceci permet de l'utiliser systématiquement lors de la conception de la machine au niveau industriel et ainsi de suivre en continu l'état vibratoire de la machine et donc son endommagement.

Selon une autre variante de l'invention, le dispositif est caractérisé en ce qu'au moins un moyen de positionnement non-conducteur positionne trois paires d'éléments conducteurs sur chaque face du roulement, ces trois paires étant positionnées à égale distance de l'axe de rotation du roulement de sorte que, dans un plan perpendiculaire à l'axe de rotation du roulement, les plans passant respectivement par les axes de symétrie de chacune des paires d'éléments conducteurs et le centre de rotation du roulement forment entre eux des angles de 120°, chacune des trois paires d'éléments conducteurs comprend un premier élément conducteur positionné radialement et un second élément conducteur positionné axialement par rapport à la bague tournante du roulement pour former respectivement les premières armatures de six condensateurs différents.

Un autre avantage d'un dispositif selon l'invention avec plusieurs capteurs capacitifs disposés à 120° par rapport à l'axe coaxial des bagues du roulement est que la localisation de l'éventuel défaut est réalisée avec une plus grande précision.

Selon une autre variante de l'invention, le dispositif est caractérisé en ce que le moyen de positionnement non-conducteur est une bague non-conductrice solidaire de la bague du roulement fixe par rapport au bâti de la machine.

Un autre avantage du dispositif de l'invention est que l'utilisation d'une bague non-conductrice comme moyen de positionnement permet un positionnement rapide et précis des différents capteurs capacitifs sur le roulement.

Selon une autre variante de l'invention, le dispositif est caractérisé en ce que le dispositif comprend au moins un moyen de réglage de la distance qui sépare les armatures participant à la formation d'un même condensateur.

Un autre avantage du dispositif de l'invention est que le réglage de la distance entre les armatures permet de définir la sensibilité et la valeur du condensateur à vide.

Selon une autre variante de l'invention, le dispositif est caractérisé en ce que les paires d'armatures de chacun des condensateurs sont associées à un montage électronique respectif formant un amplificateur de charge destiné à délivrer en temps réel un signal représentatif des déplacements d'une armature par rapport à l'autre dus aux vibrations lors du fonctionnement du roulement mécanique.

Selon une autre variante de l'invention, le dispositif est caractérisé en ce que chaque paire d'armatures est associée à un montage électronique formant un amplificateur de charge (AC), la seconde armature formée par la bague tournante est reliée à la masse et la première armature positionnée par un moyen de positionnement non-conducteur est reliée à l'entrée inverseuse d'un Amplificateur Linéaire Intégré (ALI) à haute impédance par un câble blindé dont le blindage est relié à l'entrée non-inverseuse de l'ALI, l'entrée non-inverseuse de l'ALI étant reliée à un générateur fournissant une tension continue, la sortie de l'ALI étant reliée à son entrée inverseuse via un condensateur et une résistance montés en parallèle.

Selon une autre variante de l'invention, le dispositif est caractérisé en ce que la sortie de l'Amplificateur Linéaire Intégré est reliée à l'entrée d'un convertisseur analogique digital dont la sortie est utilisée par un circuit à microprocesseur pour calculer la variation de distance, par l'exécution d'un programme mettant en oeuvre la formule :

$$\Delta x = -\frac{C_f}{2.V.S_c}\Delta V_s$$

et pour déclencher une alarme par comparaison du résultat obtenu avec un seuil mémorisé, $\Delta x$ représentant la variation de la distance (d) séparant les deux armatures du condensateur, $\Delta V_s$ représentant la variation de la tension à la sortie de l'amplificateur, $V$ représentant la composante continue de la tension à l'entrée de l'amplificateur, $S_c$ représentant la sensibilité de la capacité et $C_f$ représentant la capacité du condensateur reliant la sortie de l'ALI à l'entrée inverseuse.

Un autre avantage du dispositif selon l'invention est que la mesure du signal vibratoire est faite avec une très grande immunité aux bruits de fond avec un courant de polarisation très faible.

Selon une autre variante de l'invention, le dispositif est caractérisé en ce qu'il comprend un moyen de détection de la fréquence de rotation du roulement pour réaliser des mesures lorsque les bagues du roulement sont dans une position définie l'une par rapport à l'autre.

Selon une autre variante de l'invention, le dispositif est caractérisé en ce que le dispositif comprend au moins un moyen de traitement fréquentiel du signal vibratoire mesuré au niveau des armatures du condensateur permettant d'obtenir le signal vibratoire d'au moins un des différents organes de la machine par comparaison avec les signatures vibratoires respectives de chacun des organes de la machine enregistrées au niveau d'au moins un moyen de mémorisation.

Selon une autre variante de l'invention, le dispositif est caractérisé en ce que le dispositif comprend au moins un moyen de traitement temporel du signal vibratoire d'au moins un des organes de la machine permettant d'obtenir plusieurs paramètres statistiques de ce signal pour être comparé avec des paramètres statistiques de défauts enregistrés au niveau d'un moyen de mémorisation.

Un autre objectif de l'invention est de proposer un procédé qui permette de mesurer en temps réel, précisément et à distance de petites variations de capacités dues aux vibrations du roulement en évitant la mesure de capacités parasites dues à un effet d'antenne.

Cet objectif est atteint grâce à un procédé de surveillance des vibrations générées par un roulement d'une machine formé par deux bagues, l'une fixe et l'autre tournante, comprenant au moins un capteur capacitif et des vibrations générées par d'autres organes de la machine qui transitent par ce roulement, caractérisé en ce qu'il comprend au moins une étape de mesure des charges induites par couplage capacitif sur une première armature conductrice du condensateur à écartement variable positionnée par un moyen de positionnement non-conducteur, solidaire de la bague fixe par rapport au bâti, une seconde armature conductrice formée par une partie de la surface de la bague tournante du roulement étant à un potentiel fixé.

Selon une variante de l'invention, le procédé est caractérisé en ce que la paire d'armatures étant associée à un montage électronique formant un amplificateur de charge, l'armature étant formée par la bague tournante reliée à la masse, l'armature étant positionnée par le moyen de positionnement non-conducteur et reliée à l'entrée inverseuse d'un Amplificateur Linéaire Intégré (ALI) à haute impédance par un câble blindé dont le blindage est relié à l'entrée non-inverseuse de l'ALI, l'entrée non-inverseuse de l'ALI étant reliée à un générateur fournissant une tension continue, la sortie de l'ALI étant reliée à son entrée inverseuse via un condensateur et une résistance montés en parallèle, le procédé comprend au moins une étape de calcul de la variation de la distance séparant les deux armatures du condensateur à partir de la variation de la tension à la sortie d'un amplificateur de charge en utilisant la relation :

$$\Delta x = -\frac{C_f}{2.V.S_c}\Delta V_s$$

$\Delta x$ représentant la variation de la distance (d) séparant les deux armatures du condensateur, $\Delta V_s$ représentant la variation de la tension à la sortie de l'amplificateur, $V$ représentant la composante continue de la tension à l'entrée de l'amplificateur, $S_c$ représentant la sensibilité de la capacité et $C_f$ représentant la capacité du condensateur reliant la sortie de l'ALI à l'entrée inverseuse.

Selon une variante de l'invention, le procédé est caractérisé en ce que, la sortie de l'Amplificateur Linéaire Intégré (ALI) étant reliée à l'entrée d'un convertisseur analogique digital dont la sortie est utilisée par un circuit à microprocesseur pour calculer la variation de distance par l'exécution d'un programme, le procédé comprend au moins une étape de déclenchement d'une alarme après comparaison de la variation ($\Delta x$) de l'écartement entre les deux armatures avec une valeur seuil.

Selon une autre variante de l'invention, le procédé est caractérisé en ce que, le dispositif comprenant un moyen de mémorisation de la signature vibratoire de chacun des organes de la machine, le procédé présente au moins :

- une étape de mesure du signal vibratoire au niveau des armatures du condensateur positionné au niveau du roulement,
- une étape de comparaison du signal vibratoire mesuré avec la signature vibratoire mémorisée d'au moins un organe défini de la machine,
- une étape de détermination puis d'extraction du signal vibratoire propre à l'organe défini de la machine depuis le signal vibratoire mesuré.

Selon une autre variante de l'invention, le procédé est caractérisé en ce que, le dispositif comprenant un moyen de mémorisation de valeurs seuils de défaut de plusieurs paramètres statistiques, le procédé présente au moins :

- une étape de mesure du signal vibratoire au niveau des armatures du condensateur positionné au niveau du roulement,
- une étape de calcul de paramètres statistiques du signal vibratoire mesuré,
- une étape de comparaison des paramètres statistiques calculés avec des valeurs seuils de défauts mémorisées,
- une étape de détermination de l'importance du défaut.

Selon une autre variante de l'invention, le procédé est caractérisé en ce que, le dispositif comprenant au moins un moyen d'affichage, le procédé présente au moins une étape d'affichage de l'importance et de la position d'un défaut.

Un avantage de l'invention est que le procédé comprenant au moins une étape de traitement des signaux délivrés par les capteurs capacitifs par l'utilisation d'au moins une technique d'analyse vibratoire, il permet de déterminer l'origine, la nature et/ou l'importance des défauts du roulement et des organes surveillés de la machine.

Un autre avantage de l'invention est que le procédé permet une surveillance continue du roulement et des organes de la machine.

DESCRIPTION DES MODES DE REALISATION PREFERES DE L'INVENTION

L'invention, ses caractéristiques et ses avantages apparaîtront plus clairement à la lecture de la description faite en référence aux figures annexées dans lesquelles :

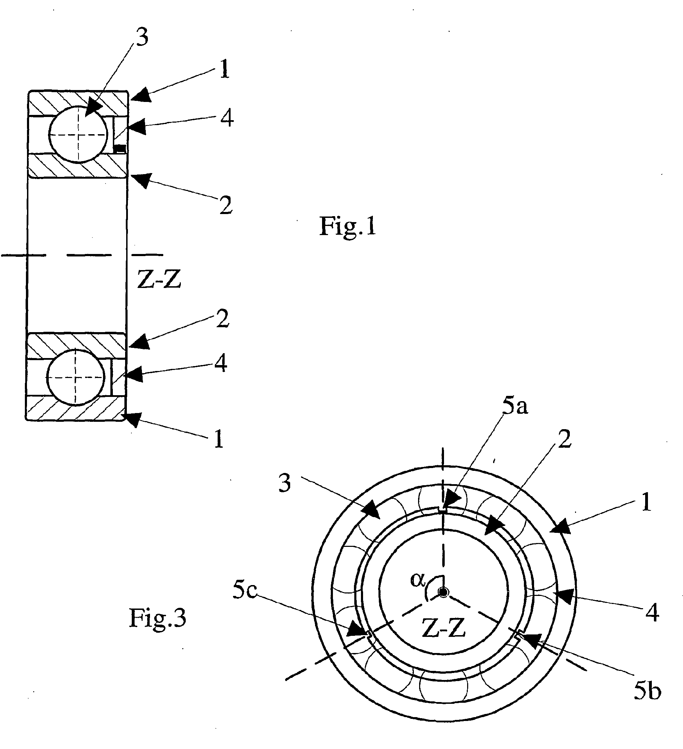

- la figure 1 représente une vue du dispositif de l'invention selon un axe perpendiculaire à l'axe de rotation du roulement, le dispositif étant représenté en coupe selon un plan passant par l'axe de rotation (Z-Z) du roulement.

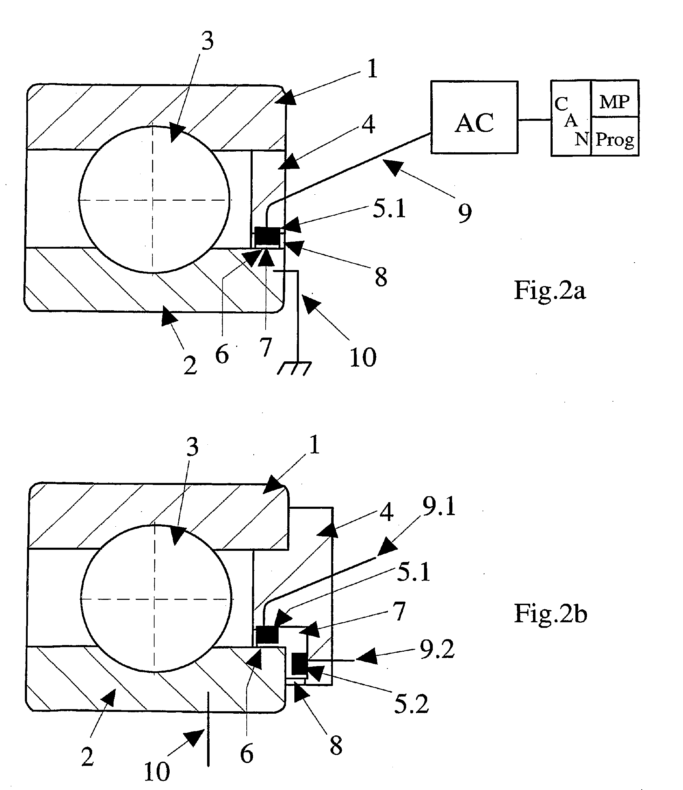

- les figures 2a et 2b représentent une partie détaillée de la figure 1 (2a), ainsi qu'une variante (2b).

- la figure 3 représente une vue du dispositif de l'invention selon l'axe de rotation (Z-Z) du roulement.
- la figure 4 représente un schéma du montage électronique du dispositif de l'invention.

Le roulement mécanique est formé de deux bagues coaxiales, l'une intérieure (2) et l'autre extérieure (1) entre lesquelles sont disposés et maintenus emprisonnés des éléments roulants (3). Ces différentes pièces sont généralement réalisées en acier pour demeurer résistantes à la compression. La face interne de la bague extérieure (1), tout comme la face externe de la bague intérieure (2), présente un chemin incurvé pour s'adapter à la forme des éléments roulants (3). La combinaison des deux chemins situés sur les bagues respectives assure le maintien des éléments roulants (3) entre les deux bagues (1&2) tout en garantissant leur déplacement dans un circuit circulaire centré sur l'axe de rotation (Z-Z) du roulement, coaxial aux deux bagues. L'écartement entre les éléments roulants est maintenu constant grâce à une cage non représentée sur la documentation.

Les éléments roulants (3) peuvent être de plusieurs types. Généralement, il s'agit de billes mais dans certains modèles, les billes sont remplacées par des rouleaux cylindriques ou tronconiques. Les roulements sont alors capables de supporter un effort radial supérieur par rapport aux roulements à billes classiques. Pour réduire l'espace radiale, le diamètre des rouleaux peut être diminué par rapport à leur longueur ; les éléments roulants sont alors appelés aiguilles. Les différents éléments roulants (3) sont généralement maintenus à distance entre eux par une cage qui permet leur répartition homogène dans le circuit circulaire formé par les deux bagues (1 &2).

Pour supprimer tout jeu éventuel et par la même occasion toute vibration inutile risquant de fausser les mesures, le roulement mécanique est légèrement précontraint. Sur le roulement, au moins un élément additionnel, non-conducteur, est rajouté. Il s'agit d'un moyen de positionnement non-conducteur (4) monté serré sur la bague de roulement qui demeure fixe par rapport au bâti de la machine. Cette bague fixe par rapport au bâti peut être soit la bague extérieure (1), soit la bague intérieure (2). Dans le cadre de la réalisation de l'invention représentée par les différentes figures, la bague extérieure (1) est fixe par rapport au bâti tandis que la bague intérieure (2) est mobile ou tournante. Le moyen de positionnement non-conducteur (4), solidaire de la bague fixe, se place alors au niveau de l'ouverture radiale située entre les bagues extérieure (1) et intérieure (2) de façon à faire une jonction entre la bague fixe et la bague tournante du roulement.

Ce moyen de positionnement non-conducteur, réalisé en matériau isolant, solidaire de la bague fixe du roulement, vient former un condensateur à écartement variable avec une partie de la bague tournante du roulement. Pour cela, le moyen de positionnement non-conducteur (4) comporte au moins un logement de positionnement pour placer une première armature conductrice (5) du condensateur à proximité d'une partie conductrice de la bague tournante qui forme une seconde armature (6). La distance qui sépare les deux armatures conductrices (5&6) est alors très faible, de l'ordre du dixième de millimètre. L'espace (7) séparant les deux armatures est un milieu isolant dit diélectrique. Pour former cet espace, le moyen de positionnement non-conducteur positionne d'une part la première armature (5) à distance de la bague tournante et est associé d'autre part à au moins un moyen de cloisonnement (8) qui se prolonge de chaque coté de l'armature (5) jusqu'à venir en contact avec la surface d'une partie de la bague tournante. Le moyen de cloisonnement (8), solidaire du moyen de positionnement non-conducteur (4), réalise ainsi un espace entre les deux armatures conductrices (5&6) qui forme un milieu isolant diélectrique (7). De plus, le moyen de cloisonnement (8) assure l'étanchéité du milieu isolant (7) ainsi créé. Ce moyen de cloisonnement (8) peut être formé par une lame métallique solidaire du moyen de positionnement (4), la lame métallique venant en contact avec une partie de la surface de la bague tournante. Ce moyen de cloisonnement (8) peut aussi être formé par un joint élastique solidaire du moyen de positionnement (4), le joint élastique présentant une lèvre qui vient en contact avec une partie de la surface de la bague tournante.

Suivant le type de vibration mesurée, le positionnement de l'armature va différer. Dans le cas de mesures de vibrations radiales, le moyen de positionnement non-conducteur (4) positionne l'armature conductrice (5.1) à proximité et radialement par rapport à la surface de la bague tournante, entre les bagues intérieure (2) et extérieure (1) du roulement. Dans le cas de mesures de vibrations axiales, le moyen de positionnement non-conducteur (4) place l'armature conductrice (5.2) à proximité d'une des surfaces axiales de la bague tournante, orientée vers l'extérieur du roulement. Dans les deux cas de figure, le moyen de positionnement non-conducteur (4) positionne d'une part une armature conductrice (5) par rapport à l'armature conductrice (6) de la bague tournante du roulement, et est d'autre part solidaire d'au moins un moyen de cloisonnement (8) de l'espace (7) qui sépare les deux armatures conductrices (5&6).

Selon un mode de réalisation particulier, le moyen de positionnement non-conducteur (4) vient positionner deux armatures conductrices (5.1&5.2) au même niveau de la bague tournante. L'une de ces armatures est une armature conductrice (5.1) disposée radialement, l'autre est une armature conductrice (5.2) disposée axialement par rapport à l'armature conductrice (6) que forme la bague tournante. Dans une telle situation, les deux armatures conductrices (5.1&5.2), qui sont positionnées par le moyen de positionnement non-conducteur (4) en regard de faces différentes de la bague tournante, peuvent partager un même espace diélectrique (7). Cet espace diélectrique (7) est alors cloisonné par au moins un moyen de cloisonnement (8), solidaire du moyen de positionnement non-conducteur (4) et dirigé vers les surfaces de la bague tournante situées en regard des deux armatures conductrices (5.1&5.2) positionnées par le moyen de positionnement non-conducteur (4).

Les deux condensateurs, respectivement radial et axial, formés sur le roulement jouent le rôle de capteurs capacitifs. Lorsque le roulement génère des vibrations axiales ou radiales ou bien lorsqu'il est traversé par ces vibrations, le déplacement relatif de l'armature conductrice (6), formée par la surface de la bague tournante, par rapport à chacune des armatures conductrices (5.1&5.2), positionnées par le moyen de positionnement non-conducteur (4), fait varier la capacité des condensateurs dans le temps.

Les condensateurs à écartement variable ainsi formés par les armatures conductrices (5&6) séparées par un milieu isolant diélectrique (7) ont des capacités de l'ordre du picofarad avec des variations de l'ordre du femtofarad.

Sur le roulement, au moins trois moyens de positionnement non-conducteur (4), tous solidaires de la bague de roulement fixe par rapport au bâti de la machine, positionnent, chacun, au moins une armature (5a, 5b et 5c) de capteur capacitif, radial ou axial, ou une paire de capteurs capacitifs. Les moyens de positionnement (4) disposent ces capteurs à égale distance de l'axe de rotation du roulement de sorte que, dans un plan perpendiculaire à l'axe de rotation du roulement, les axes passant respectivement par la position de chacun des capteurs et le centre de rotation du roulement forment entre eux des angles ($\alpha$) de 120°.

La disposition régulière de ces capteurs sur un même coté du roulement permet de faciliter la localisation d'un éventuel défaut à l'origine de vibrations dans un plan perpendiculaire à l'axe de rotation du roulement. La disposition de ces capteurs permet une mesure plus fine du signal vibratoire, et ainsi facilite la rectification par rééquilibrage d'un éventuel défaut de type balourd. De même, une disposition régulière et symétrique de ces capteurs de chaque coté du roulement permet de faciliter la localisation de la source des vibrations dans un plan contenant l'axe de rotation du roulement. Ces différents capteurs permettent ainsi la mesure d'une part des signaux vibratoires provenant directement du roulement et d'autre part des signaux vibratoires provenant des différents organes de la machine et qui en se propageant traversent le roulement. Le signal vibratoire de chacun des organes de la machine présente alors une signature fréquentielle propre.

Les différents moyens de positionnement non-conducteur (4), solidaire de la bague fixe par rapport au bâti, peuvent être réalisés par une seule et même structure. Cette structure peut alors prendre la forme d'une bague non-conductrice et solidaire de la bague fixe par rapport au bâti. Cette bague isolante permet, lors de la phase industrielle, de positionner plus facilement les capteurs capacitifs aux points stratégiques du roulement.

Pour mesurer les variations de capacités des capteurs en fonctions des vibrations, les armatures conductrices (5&6) des condensateurs variables de l'invention sont associées à un montage électronique appelé amplificateur de charge par des moyens de connections appropriés (9.1, 9.2 et 10).

Une première armature (6) est formée par une partie de la surface de la bague tournante du roulement et une seconde (5) par un conducteur situé en vis-à-vis mais fixe relativement à la seconde armature (5). La variation de la capacité au cours du temps d'un tel condensateur est donnée par la rotation :

$$C(t) = \varepsilon \frac{S}{d - s(t)} = \varepsilon \frac{S}{x(t)}$$

avec $d$ la distance séparant les deux armatures, $s(t)$ l'amplitude de la variation de l'armature mobile (6) par rapport à son point d'équilibre, $S$ la surface active des armatures et $\varepsilon$ la permittivité du vide.

La sensibilité de la capacité ($S_c$) du condensateur est alors définie par la relation :

$$S_c = \frac{\Delta C}{\Delta x} = \frac{\Delta C}{\Delta(d - s(t))} = +\varepsilon \frac{S}{(d - s(t))^2} = +\varepsilon \frac{S}{[x(t)]^2} \approx +\varepsilon \frac{S}{d^2}$$

Cette sensibilité peut être considérée comme constante pour des petites variations de $s(t)$. Les déplacements de l'armature (6) étant faibles, de l'ordre de quelques micromètres, il est nécessaire d'avoir une grande sensibilité. La distance d est alors de l'ordre de plusieurs dizaines de fois $s(t)$, ce qui détermine le point de fonctionnement du condensateur. Par exemple, pour des surfaces en regard de $S=5mm^2$, une distance $d=0,1mm$ le diélectrique étant l'air, on obtient un condensateur dont la capacité au point de fonctionnement est égale à $C=0,44pF$ avec une sensibilité $S_c=0,44.10^4 pF/m$ et pour un déplacement $s(t)=1\mu m$ la variation de capacité $\Delta C=4,4fF$. Les condensateurs du dispositif ont des capacités de l'ordre du picofarad avec des variations de l'ordre de quelques femtofarads.

L'objectif étant de mesurer avec précision et à distance de petites variations de capacités pour traduire en temps réel les variations de la distance entre les deux armatures dues au vibrations dans le roulement, les méthodes dites à deux pôles ne peuvent convenir car la mesure indiquerait alors la valeur de $C(t)+Cp,$ où Cp est la capacité parasite des fils de liaison due à un effet d'antenne.

La méthode utilisée consiste à considérer les charges induites par couplage capacitif sur une seule des deux armatures, l'autre armature étant à un potentiel fixé. La variation des charges induites est alors l'image analogique du déplacement $s(t).$

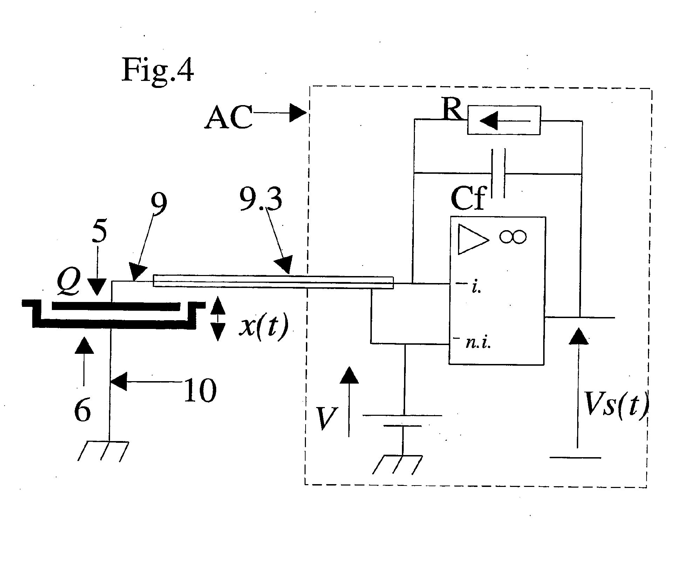

Un schéma du montage électronique de l'amplificateur de charge utilisé est présenté sur la figure 4. L'Amplificateur Linéaire Intégré (ALI) utilisé doit être préférentiellement de type JFET, MOSFET ou CMOS avec une très haute impédance d'entrée. Cette forte impédance lui confère alors une importante immunité aux bruits avec un courant de polarisation inférieur à 2 $fA.$

Dans le montage représenté, l'armature conductrice (6) du condensateur formée par une partie de la bague tournante est reliée à la masse. La seconde armature conductrice (5), positionnée par le moyen de positionnement non-conducteur (4), de chacun des condensateurs est gardée par un anneau et reliée à l'entrée inverseuse (*i.*) d'un Amplificateur Linéaire Intégré (ALI) par un câble (9, 9.1, 9.2) blindé dont le blindage (9.3) se trouve relié à l'entrée non-inverseuse (*n.i.*) de l'ALI. L'ALI est relié par un générateur de tension continu au niveau de son entrée non-inverseuse. Dans un tel montage, la capacité parasite (*Cp*) due au câble de liaison qui pourrait perturber les mesures n'est pas traduite à la sortie de l'ALI. Seule la composante continue et les variations de tension dues au déplacement de l'armature mobile (6) sont alors traduites à la sortie de l'ALI. Entre la sortie et l'entrée inverseuse (*i.*) de l'ALI, un condensateur de capacité (*C$_f$*) est monté en parallèle avec une résistance (R).

La relation qui lie la tension de sortie *Vs(t)* à la charge *Q(t)* sur l'armature (5) dont les charges induites sont mesurées est ainsi :

$$Vs(t) = -\frac{Q(t)}{C_f} = -V\frac{C}{C_f}$$

Les charges induites étant égales à : Q = *CV,* les variations de charge dues au déplacement relatif des armatures sont données par : $\Delta Q = C\Delta V + V\Delta C = 2V\Delta C$ (car la tension dérivée du champ électrique entre les deux armatures et la capacité varient en 1/d).

La relation qui lie la tension de sortie de l'ALI à la vibration du roulement est alors :

$$\Delta Vs = -\frac{\Delta Q}{C_f} = -\frac{2.V.\Delta C}{C_f} \quad \Rightarrow \quad \Delta C = -\frac{C_f}{2.V}\Delta V_s = S_c.\Delta x$$

$$\Delta x = -\frac{C_f}{2.V.S_c}\Delta V_s$$

où : $\Delta x$ représente la variation de la distance *d* séparant les deux armatures du condensateur, $\Delta Vs$ représente la variation de la tension à la sortie de l'amplificateur, *V* représente la composante continue de la tension à l'entrée de l'amplificateur, $S_c$ représente la sensibilité de la capacité et *C$_f$* représente la capacité du condensateur reliant la sortie de l'ALI à l'entrée inverseuse.

Ainsi, par exemple, si $\Delta x$ = *1µm = 10$^{-6}$ m* et *C$_f$ = 1pF,* V = 5V, Sc = 10$^4$pF/m$^2$ = 10$^{-8}$F/m$^2$ alors $V_s$ = *0,1V.* La résistance R est négligeable dans le calcul de la transmittance. Si on souhaite que $\Delta x$ et $\Delta Vs$ soient de même signe, la tension V peut alors être négative.

La sortie de l'Amplificateur Linéaire Intégré (ALI) peut être reliée à l'entrée d'un convertisseur analogique digital (CAN) dont la sortie est utilisée par un circuit à microprocesseur (MP) afin de calculer la variation de distance ($\Delta x$) par l'exécution d'un programme (Prog) utilisant la formule :

$$\Delta x = -\frac{C_f}{2.V.S_c}\Delta V_s$$

et pour permettre le déclenchement d'une alarme après comparaison du résultat du calcul avec une valeur seuil mémorisée.

Le dispositif de l'invention peut être relié à un moyen de traitement du signal vibratoire mesuré. Le traitement de ce signal permet une analyse temporelle d'une part et une analyse fréquentielle d'autre part.

En effet, chaque élément tournant d'une machine mécanique est caractérisé par une ou plusieurs fréquences caractéristiques de défauts. Un roulement, par exemple, est caractérisé par trois fréquences de défauts telles que la fréquence caractéristique de défaut d'un élément roulant (3), et les fréquences de défauts de chacune des bagues, intérieure (2) et extérieure (1). Ces fréquences sont, au préalable, calculées à partir des caractéristiques géométriques du roulement comme le nombre d'éléments roulants (3), le diamètre de la bague intérieure (2) et le diamètre de la bague extérieure (1) ainsi que la vitesse de rotation du moteur puis enregistrées dans un moyen de mémorisation. L'analyse du spectre de puissance du signal délivré par le capteur capacitif permet donc de localiser le ou les défauts présents dans le roulement et de suivre dans le temps l'évolution de l'amplitude de chaque fréquence afin de déterminer le nombre de cycles de fonctionnement du composant avant la rupture.

Par ailleurs, l'état mécanique d'un roulement ou d'autres composants tournants d'une machine mécanique peut être caractérisé par des paramètres statistiques que l'on appelle indicateurs de défaut. Parmi ces paramètres, les plus utilisés sont la valeur R.M.S., aussi appelé valeur efficace du signal, le facteur crête, formé par le rapport entre la valeur de pointe et la valeur efficace du signal, ou bien encore le Kurtosis qui correspond à une mesure des pics ou de l'aplatissement relatif d'une distribution d'une variable aléatoire réelle par rapport à une distribution gaussienne. Ces différents paramètres statistiques sont calculés à partir du signal vibratoire du roulement. Il s'agit alors de détecter un changement significatif dans ces paramètres, par comparaison avec des valeurs seuil enregistrées dans un moyen de mémorisation. La détermination de ces valeurs seuil est réalisée au préalable soit par une expérimentation de la machine, soit par des lois statistiques. La caractérisation du défaut et l'estimation de sa gravité permettent d'établir un diagnostic.

Ainsi, lorsqu'un défaut apparaît sur un organe de la machine, il est facile d'estimer son degré de sévérité, de suivre son évolution et éventuellement de pronostiquer le remplacement du composant, soit par l'analyse temporelle du signal délivré par le capteur, soit par l'analyse fréquentielle du même signal. L'emplacement de ce capteur capacitif a l'avantage de pouvoir délivrer directement la signature du défaut du composant mécanique et permet ainsi d'éviter les erreurs de diagnostic.

Le dispositif de l'invention peut être relié à un moyen d'affichage pour permettre, après que la variation de la distance ($\Delta x$) est calculée, de visualiser la position d'un éventuel défaut du roulement.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes ;

## Revendications

1. Dispositif de surveillance des vibrations générées par un roulement d'une machine formé par deux bagues, l'une extérieure (1) et l'autre intérieure (2), l'une fixe par rapport au bâti d'une machine et l'autre tournante, coaxiales entre lesquelles au moins un élément roulant (3) est emprisonné et susceptible de se déplacer, et des vibrations générées par d'autres organes de la machine qui transitent par ce roulement, chacun des organes de la machine possédant une signature fréquentielle respective, **caractérisé en ce que** le dispositif comprend au moins un moyen de positionnement non-conducteur (4), monté serré sur la bague de roulement fixe par rapport au bâti de la machine, le moyen de positionnement non-conducteur (4) comportant au moins un logement formant un moyen de positionnement d'au moins un élément conducteur, formant une première armature (5) d'un condensateur, à une distance d'une partie conductrice de la bague tournante, formant la seconde armature (6) du condensateur, et le moyen de positionnement non-conducteur (4) étant solidaire d'au moins un moyen de cloisonnement (8), le moyen de cloisonnement (8) permettant de créer entre les deux armatures (5&6) un espace (7) qui forme un milieu isolant diélectrique et d'assurer l'étanchéité de ce milieu isolant (7) en étant en contact avec une partie de la surface de la bague tournante.

2. Dispositif selon la revendication 1, **caractérisé en ce que** le moyen de cloisonnement (8) est formé par une lame métallique solidaire du moyen de positionnement (4) et en contact avec une partie de la surface de la bague tournante.

3. Dispositif selon la revendication 1, **caractérisé en ce que** le moyen de cloisonnement (8) est formé par un joint élastique solidaire du moyen de positionnement (4), le joint élastique présentant une lèvre en contact avec une partie de la surface de la bague tournante.

4. Dispositif selon une des revendications 1 à 3, **caractérisé en ce que** le moyen de positionnement non-conducteur (4) positionne au moins trois armatures conductrices (5a, 5b et 5c) radialement par rapport à la seconde armature conductrice (6) formée par une partie de la surface de la bague tournante du roulement, les axes passant respectivement par les positions de chacun des éléments conducteurs et le centre de rotation du roulement forment entre eux des angles (α) d'au plus 120°..

5. Dispositif selon la revendication 4, **caractérisé en ce que** les armatures conductrices (5.1&6) en vis à vis sont l'une convexe et l'autre concave dans un plan perpendiculaire à l'axe de rotation du roulement.

6. Dispositif selon une des revendications 1 à 3, **caractérisé en ce que** le moyen de positionnement non-conducteur (4) positionne la première armature conductrice (5.2) axialement par rapport à la seconde armature conductrice (6) formée par une partie de la surface de la bague tournante du roulement.

7. Dispositif selon l'une des revendications 1 à 6, **caractérisé en ce que** le moyen de positionnement non-conducteur (4) positionne une paire d'armatures conductrices, l'une radialement (5.1), l'autre axialement (5.2) par rapport à l'armature conductrice (6) formée par une partie de la surface de la bague tournante du roulement.

8. Dispositif selon la revendication 7, **caractérisé en ce qu'**un seul espace (7) formant le milieu isolant diélectrique est commun à la paire de condensateurs formés par les deux armatures conductrices (5.1&5.2) positionnées par le moyen de positionnement non-conducteur (4) d'une part et l'armature conductrice (6) formée par une partie de la surface de la bague tournante du roulement d'autre part.

9. Dispositif selon une des revendications 1 à 8, **caractérisé en ce qu'**au moins un moyen de positionnement non-conducteur (4) positionne trois paires d'éléments conducteurs sur chaque face du roulement, ces trois paires étant positionnées à égale distance de l'axe de rotation (Z-Z) du roulement de sorte que, dans un plan perpendiculaire à l'axe de rotation (Z-Z) du roulement, les plans passant respectivement par les axes de symétrie de chacune des paires d'éléments conducteurs et le centre de rotation du roulement forment entre eux des angles (α) de 120°, chacune des trois paires d'éléments conducteurs comprend un premier élément conducteur (5.1) positionné radialement et un second élément conducteur (5.2) positionné axialement par rapport à la bague tournante du roulement pour former respectivement les premières armatures de six condensateurs différents.

10. Dispositif selon une des revendications 1 à 9, **caractérisé en ce que** le moyen de positionnement non-conducteur (4) est une bague non-conductrice solidaire de la bague du roulement fixe par rapport au bâti de la machine.

11. Dispositif selon une des revendications 1 à 10 **caractérisé en ce que** le dispositif comprend au moins un moyen de réglage de la distance qui sépare les armatures participant à la formation d'un même condensateur.

12. Dispositif selon une des revendications 1 à 11, **caractérisé en ce que** les paires d'armatures de chacun des condensateurs sont associées à un montage électronique respectif formant un amplificateur de charge destiné à délivrer en temps réel un signal représentatif des déplacements d'une armature (6) par rapport à l'autre dus aux vibrations lors du fonctionnement du roulement mécanique.

13. Dispositif selon la revendication 12, **caractérisé en ce que** chaque paire d'armatures est associée à un montage électronique formant un amplificateur de charge (AC), l'armature (6) formée par la bague tournante est reliée à la masse et l'armature (5) positionnée par le moyen de positionnement non-conducteur (4) est reliée à l'entrée inverseuse (*i*) d'un Amplificateur Linéaire Intégré (ALI) à haute impédance par un câble (9, 9.1, 9.2) blindé dont le blindage (9.3) est relié à l'entrée non-inverseuse de l'ALI, l'entrée non-inverseuse de l'ALI étant reliée à un générateur fournissant une tension continue (*V*), la sortie de l'ALI étant reliée à son entrée inverseuse via un condensateur *(Cf)* et une résistance (R) montés en parallèle.

14. Dispositif selon la ,revendication 13, **caractérisé en ce que** la sortie de l'Amplificateur Linéaire Intégré (ALI) est reliée à l'entrée d'un convertisseur analogique digital dont la sortie est utilisée par un circuit à microprocesseur pour calculer la variation dé distance par l'exécution d'un programme mettant en oeuvre la formule :

$$\Delta x = -\frac{C_f}{2.V.S_c}\Delta V_s$$

et pour déclencher une alarme par comparaison du résultat obtenu avec un seuil mémorisé, $\Delta x$ représentant la variation de la distance (d) séparant les deux armatures du condensateur, $\Delta V_s$ représentant la variation de la tension à la sortie de l'amplificateur, $V$ représentant la composante continue de la tension à l'entrée de l'amplificateur, $S_c$ représentant la sensibilité de la capacité et $C_f$ représentant la capacité du condensateur reliant la sortie de l'ALI à l'entrée inverseuse.

**15.** Dispositif selon une des revendications 1 à 14, **caractérisé en ce qu'**il comprend un moyen de détection de la fréquence de rotation du roulement pour réaliser des mesures lorsque les bagues du roulement sont dans une position définie l'une par rapport à l'autre.

**16.** Dispositif selon la revendication 14 ou 15, **caractérisé en ce que** le dispositif comprend au moins un moyen de traitement fréquentiel du signal vibratoire mesuré au niveau des armatures (5&6) du condensateur permettant d'obtenir le signal vibratoire d'au moins un des différents organes de la machine par comparaison avec les signatures vibratoires respectives de chacun des organes de la machine enregistrées au niveau d'au moins un moyen de mémorisation.

**17.** Dispositif selon la revendication 16, **caractérisé en ce que** le dispositif comprend au moins un moyen de traitement temporel du signal vibratoire d'au moins un des organes de la machine permettant d'obtenir plusieurs paramètres statistiques de ce signal pour être comparés avec des paramètres statistiques de défauts enregistrés au niveau d'un moyen de mémorisation.

**18.** Procédé de surveillance des vibrations générées par un roulement d'une machine formé par deux bagues, l'une fixe et l'autre tournante, comprenant au moins un capteur capacitif et des vibrations générées par d'autres organes de la machine qui transitent par ce roulement, **caractérisé en ce qu'**il comprend au moins une étape de mesure des charges induites par couplage capacitif sur une première armature conductrice (5) d'un condensateur à écartement variable positionnée par un moyen de positionnement non-conducteur solidaire de la bague fixe par rapport au bâti, une seconde armature conductrice (6) formée par une partie de la surface de la bague tournante du roulement étant à un potentiel fixé.

**19.** Procédé selon la revendication 18, **caractérisé en ce que** la paire d'armatures étant associée à un montage électronique formant un amplificateur de charge (AC), l'armature (6) étant formée par la bague tournante reliée à la masse, l'armature (5) étant positionnée par le moyen de positionnement non-conducteur (4) et reliée à l'entrée inverseuse (*i*) d'un Amplificateur Linéaire Intégré (ALI) à haute impédance par un câble (9, 9.1, 9.2) blindé dont le blindage (9.3) est relié à l'entrée non-inverseuse de l'ALI, l'entrée non-inverseuse de l'ALI étant reliée à un générateur fournissant une tension continue (*V*), la sortie de l'ALI étant reliée à son entrée inverseuse via un condensateur (*Cf*) et une résistance (R) montés en parallèle, le procédé comprend au moins une étape de calcul de la variation ($\Delta x$) de la distance séparant les deux armatures (5&6) du condensateur à partir de la variation de la tension ($\Delta V_s$) à la sortie d'un amplificateur de charge (AC) en utilisant la relation :

$$\Delta x = -\frac{C_f}{2.V.S_c}\Delta V_s$$

$\Delta x$ représentant la variation de la distance (d) séparant les deux armatures du condensateur, $\Delta V_s$ représentant la variation de la tension à la sortie de l'amplificateur, $V$ représentant la composante continue de la tension à l'entrée de l'amplificateur, $S_c$ représentant la sensibilité de la capacité et $C_f$ représentant la capacité du condensateur reliant la sortie de l'ALI à l'entrée inverseuse.

**20.** Procédé selon la revendication 18 ou 19, **caractérisé en ce que**, la sortie de l'Amplificateur Linéaire Intégré (ALI) étant reliée à l'entrée d'un convertisseur analogique digital (CAN) dont la sortie est utilisée par un circuit à microprocesseur (MP) pour calculer la variation de distance par l'exécution d'un programme (Prog), le procédé comprend au moins une étape de déclenchement d'une alarme après comparaison de la variation ($\Delta x$) de l'écartement entre les deux armatures avec une valeur seuil.

21. Procédé selon une des revendications 18 à 20, **caractérisé en ce que**, le dispositif comprenant un moyen de mémorisation de la signature vibratoire de chacun des organes de la machine, le procédé présente au moins :

    - une étape de mesure du signal vibratoire au niveau des armatures (5&6) du condensateur positionné au niveau du roulement,
    - une étape de comparaison du signal vibratoire mesuré avec la signature vibratoire mémorisée d'au moins un organe défini de la machine,
    - une étape de détermination puis d'extraction du signal vibratoire propre à l'organe défini de la machine depuis le signal vibratoire mesuré.

22. Procédé selon une des revendications 18 à 21, **caractérisé en ce que**, le dispositif comprenant un moyen de mémorisation de valeurs seuils de défaut de plusieurs paramètres statistiques, le procédé présente au moins :

    - une étape de mesure du signal vibratoire au niveau des armatures (5&6) du condensateur positionné au niveau du roulement,
    - une étape de calcul de paramètres statistiques du signal vibratoire mesuré,
    - une étape de comparaison des paramètres statistiques calculés avec des valeurs seuils de défauts mémorisées,
    - une étape de détermination de l'importance du défaut.

23. Procédé selon une des revendications 18 à 22, **caractérisé en ce que**, le dispositif comprenant au moins un moyen d'affichage, le procédé présente au moins une étape d'affichage de la position et de l'importance d'un défaut.


**Claims**

1. Device for monitoring the vibrations generated by a bearing in a machine formed by two coaxial rings, one being an outer ring (1) and the other an inner ring (2), one of which is fixed with respect to the structure of the machine, and the other rotating, and between which at least one rolling element (3) is trapped and capable of moving, and vibrations generated by other components of the machine which pass through this bearing, each of the components of the machine having its own frequency signature, **characterised in that** the device comprises at least one non-conducting positioning means (4) tightly amounted on the bearing ring which is fixed with respect to the structure of the machine, the non-conducting positioning means (4) including at least one housing forming a means positioning at least one conducting element, forming a first conducting plate (5) of a capacitor, spaced from a conducting part of the rotating ring, farming the second plate (6) of the capacitor, and the non-conducting positioning means (4) bering attached to at least one partitioning means (8), the positioning means (8) making it possible to create a space (7) which forms a dielectric insulating medium between the two plates (5 & 6) and ensuring sealing of this insulating medium (7) by contacting a part of the surface of the rotating ring.

2. Device as claimed in Claim 1, **characterised in that** the partitioning means (8) is formed by a metal blade attached to the positioning means (4) and in contact with a part of the surface of the rotating ring.

3. Device as claimed in Claim 1, **characterised in that** the partitioning means (8) is formed by an elastic gasket attached to the positioning means (4), the elastic gasket having a lip which is in contact with a part of the surface of the rotating ring.

4. Device as claimed in any one of Claims 1 to 3, **characterised in that** the non-conducting positioning means (4) positions at least three conducting plates (5a, 5b, 5c) radially with respect to the second conducting plate (6) formed by a part of the surface of the rotating ring of the bearing, the axes passing respectively through the positions of each of the conducting elements and the centre of rotation of the bearing form angles ($\alpha$) of at most 120° between them.

5. Device as claimed in Claim 4, **characterised in that** the opposing conducting plates (5.1 & 6) comprise a convex plate and a concave plate in a plane perpendicular to the axis of rotation of the bearing.

6.  Device as claimed in any one of Claims 1 to 3, **characterised in that** the non-conducting positioning means (4) positions the first conducting plate (5.2) axially with respect to the second conducting plate (6) formed by a part of the surface of the rotating ring of the bearing.

7.  Device as claimed in any one of Claims 1 to 6, **characterised in that** the non-conducting positioning means (4) positions a pair of conducting plates, one radially (5.1) and the other axially (5.2) in relation to the conducting plate (6) formed by a part of the surface of the rotating ring of the bearing.

8.  Device as claimed in Claim 7, **characterised in that** one single space (7) forming the dielectric insulating medium is common to the pair of capacitors formed by the two conducting plates (5.1 & 5.2) positioned by the non-conducting positioning means (4) on the one hand and the conducting plate (6) formed by a part of the surface of the rotating ring of the bearing on the other hand.

9.  Device as claimed in any one of Claims 1 to 8, **characterised in that** at least one non-conducting positioning means (4) positions three pairs of conducting elements on each face of the bearing, these three pairs being positioned equidistantly from the axis of rotation (Z-Z) of the bearing, such that in a plane perpendicular to the axis of rotation (Z-Z) of the bearing the planes passing respectively through the axes of symmetry of each of the pairs of conducting elements and the centre of rotation of the bearing form angles ($\alpha$) of 120° between them, each of the three pairs of conducting elements comprising a first conducting element (5.1) positioned radially and a second conducting element (5.2) positioned axially with respect to the rotating ring of the bearing in order to form the first plates of six different capacitors respectively.

10. Device as claimed in any one of Claims 1 to 9, **characterised in that** the non-conducting positioning means (4) is a non-conducting ring attached to the ring of the bearing which is fixed with respect to the structure of the machine.

11. Device as claimed in any one of Claims 1 to 10, **characterised in that** the device comprises at least one means for adjusting the distance which separates the conducting plates forming part of one and the same capacitor.

12. Device as claimed in any one of Claims 1 to 11, **characterised in that** the pairs of plates of each of the capacitors are associated with a respective electronic circuit forming a charge amplifier (AC) which is intended to deliver in real time a signal representing the movements of one plate with respect to the other due to the vibration during the operation of the mechanical bearing.

13. Device as claimed in Claim 12, **characterised in that** each pair of plates is associated with an electronic circuit forming a charge amplifier (CA), the plate (6) formed by the rotating ring is connected to earth and the plate (5) positioned by the non-conducting positioning means (4) is connected to the inverting input (i) of a high-impedance integrated linear amplifier (ILA) by a shielded cable (9, 9.1, 9.2), the shield of which (9.3) is connected to the non-inverting input of the ILA, the non-inverting input of the ILA being connected to a generator supplying a direct voltage (V), and an output of the ILA being connected to its inverting input via a capacitor (Cf) and a resistor (R) mounted in parallel.

14. Device as claimed in Claim 13, **characterised in that** the output of the integrated linear amplifier (ILA) is connected to the input of an analogue-to-digital converter, the output of which is used by a microprocessor circuit to calculate the distance variation, by the execution of a program implementing the formula:

$$\Delta x = -\frac{C_f}{2.V.S_c}\Delta V_s$$

and to activate an alarm by comparison of the result obtained with a stored threshold, $\Delta x$ representing the variation of the distance (d) separating the two capacitor plates, $\Delta V_s$ representing the variation of the voltage at the output of the amplifier, $V$ representing the DC component of the voltage at the input of the amplifier, $S_c$ representing the sensitivity of the capacitance and $C_f$ representing the capacitance of the capacitor connecting the output of the ILA to the inverting input.

**15.** Device as claimed in any one of Claims 1 to 14, **characterised in that** it comprises a means for detecting the frequency of rotation of the bearing in order to perform measurements when the rings of the bearing are in a defined position with respect to one another.

**16.** Device as claimed in Claim 14 or Claim 15, **characterised in that** the device comprises at least one means for processing the frequency of the measured vibration signal at the plates (5 & 6) of the capacitor making it possible to obtain the vibration signal of at least one of the different components of the machine by comparison with the respective vibration signature of each of the components of the machine recorded in at least one storage means.

**17.** Device as claimed in Claim 16, **characterised in that** the device comprises at least one means for processing the timing of the vibration signal of at least one of the components of the machine making it possible to obtain several statistical parameters of this signal to be compared with statistical fault parameters recorded in a storage means.

**18.** Method for monitoring the vibrations generated by a bearing in a machine formed by two rings, one fixed and the other rotating, comprising at least one capacitive sensor, and vibrations generated by other components of the machine which pass through this bearing, **characterised in that** it comprises at least one step of measuring the induced charges by capacitive coupling to a first conducting plate (5) of a variable-gap capacitor positioned by a non-conducting positioning means attached to the ring which is fixed with respect to the structure, a second conducting plate (6) formed by a part of the surface of the rotating ring of the bearing being at a fixed potential.

**19.** Method as claimed in Claim is **characterised in that** the pair of plates are associated with an electronic circuit forming a charge amplifier (CA), the plate (6) formed by the rotating ring which is connected to earth, the plate (5) is positioned by the non-conducting positioning means (4) and connected to the inverting input ($i$) of a high-impedance integrated linear amplifier (ILA) by a shielded cable (9, 9.1, 9.2), the shield of which (9.3) is connected to the non-inverting input of the ILA, the non-inverting input of the ILA being connected to a generator supplying a DC voltage ($V$), the output of the ILA being connected to its inverting input via a capacitor ($C_f$) and a resistor (R) mounted in parallel, and the method comprises at least one step of calculating the variation ($\Delta x$) of the distance separating the two plates (5 & 6) of the capacitor from the variation of the voltage ($\Delta V_S$) at the output of a charge amplifier (CA) using the relation:

$$\Delta x = -\frac{C_f}{2.V.S_c}\Delta V_s$$

$\Delta x$ representing the variation of the distance (d) separating the two capacitor plates, $\Delta V_S$ representing the variation of the voltage at the output of the amplifier, $V$ representing the DC component of the voltage at the input of the amplifier, $S_C$ representing the sensitivity of the capacitance and $C_f$ representing the capacitance of the capacitor connecting the output of the ILA to the inverting input.

**20.** Method as claimed in Claim 18 or 19, **characterised in that** the output of the integrated linear amplifier (ILA) is connected to the input of an analogue-to-digital converted (ADC), the output of which is used by a microprocessor circuit (MP) to calculate the distance variation by the execution of a program (Prog), and the method comprises at least one step of activating an alarm after comparison of the calculated distance variation ($\Delta x$) of the distance between the two plates with a threshold value.

**21.** Method as claimed in any one of Claims 18 to 20, **characterised in that** the device comprises a means for storing the vibration signature of each of the components of the machine, the method comprising at least:

- a step of measuring the vibration signal at the plates (5 & 6) of the capacitor positioned at the bearing,
- a step of comparing the measured vibration signal with the stored vibration signature of at least one defined component of the machine,
- a step of determining and then extracting the vibration signal associated with the defined components of the machine from the measured vibration signal.

**22.** Method as claimed in any one of Claims 18 to 21, **characterised in that** the device comprises a means for storing fault threshold values of several statistical parameters, the method comprising at least:

- a step of measuring the vibration signal at the plates (5, 6) of the capacitor positioned at the bearing,
- a step of calculating the statistical parameters of the measured vibration signal,
- a step of comparing the calculated statistical parameters with stored fault threshold values,
- a step of determining the severity of the fault.

23. Method as claimed in any one of Claims 18 to 22, **characterised in that** the device comprises at least one display means, the method comprising at least one step of displaying the position and the severity of a fault.

**Patentansprüche**

1. Vorrichtung zum Überwachen von Schwingungen, die von einem Lager einer Maschine erzeugt werden, das aus zwei koaxialen Ringen gebildet ist, von denen der eine außen (1) und der andere innen (2) ist, wobei der eine bezüglich des Maschinenrahmens ortsfest und der andere drehbar ist, und zwischen denen mindestens ein Roll-Element (3) eingeschlossen und in der Lage ist, sich zu bewegen, sowie von Schwingungen, die von anderen Elementen der Maschine erzeugt werden, und die über das Lager laufen, wobei jedes der Elemente der Maschine eine jeweilige Frequenzsignatur aufweist, **dadurch gekennzeichnet, dass** die Vorrichtung mindestens ein nichtleitfähiges Positionierungsmittel (4) aufweist, das an dem Lagerring, der bezüglich des Maschinenrahmens ortsfest ist, eingespannt montiert ist, wobei das nichtleitfähige Positionierungsmittel (4) mindestens eine Ausnahme aufweist, die ein Positionierungsmittel für mindestens ein leitfähiges Element bildet, das einen ersten Belag (5) eines Kondensators bildet, in einem Abstand von einem leitfähigen Teil des drehbaren Rings, der den zweiten Belag (6) des Kondensators bildet, und wobei das nichtleitfähige Positionierungsmittel (4) mit mindestens einem Abtrennmittel (8) einstückig ist, wobei das Abtrennmittel (8) ermöglicht, zwischen den beiden Belängen (5 und 6) einen Raum (7) auszubilden, der ein dielektrisches isolierendes Medium bildet, und die Dichtigkeit des isolierenden Mediums (7) durch im Kontakt sein mit einem Teil der Oberfläche des drehbaren Rings sicherzustellen.

2. Vorrichtung gemäß Anspruch 1, **dadurch gekennzeichnet, dass** das Abtrennmittel (8) durch ein Metallblatt ausgebildet ist, das mit dem Positionierungsmittel (4) einstückig ist und mit einem Teil der Oberfläche des drehbaren Rings in Kontakt ist.

3. Vorrichtung gemäß Anspruch 1, **dadurch gekennzeichnet, dass** das Abtrennmittel (8) durch eine elastische Dichtung ausgebildet ist, die mit dem Positionierungsmittel (4) einstückig ist, wobei die elastische Dichtung eine Lippe in Kontakt mit einem Teil der Oberfläche des drehbaren Rings aufweist.

4. Vorrichtung gemäß einem der Ansprüche 1 bis 3, **dadurch gekennzeichnet, dass** das nichtleitfähige Positionierungsmittel (4) mindestens drei leitfähige Beläge (5a, 5b und 5c) bezüglich des zweiten leitfähigen Belags (6), der durch einen Teil der Oberfläche des drehbaren Rings des Lagers ausgebildet ist, radial positioniert, wobei die Achsen, die jeweils durch die Positionen von jedem der leitfähigen Elemente verlaufen, und der Drehpunkt des Lagers zwischen einander Winkel ($\alpha$) von höchstens 120° ausbilden.

5. Vorrichtung gemäß Anspruch 4, **dadurch gekennzeichnet, dass** der eine von den einander gegenüberliegenden leitfähigen Belägen (5.1 und 6) in einer Ebene senkrecht zu der Rotationsachse des Lagers konvex ist und der andere konkav ist.

6. Vorrichtung gemäß einem der Ansprüche 1 bis 3, **dadurch gekennzeichnet, dass** das nichtleitfähige Positionierungsmittel (4) den ersten leitfähigen Belag (5.2) bezüglich des zweiten leitfähigen Belags (6), der durch einen Teil der Oberfläche des drehbaren Rings des Lagers gebildet ist, axial positioniert.

7. Vorrichtung gemäß einem der Ansprüche 1 bis 6, **dadurch gekennzeichnet, dass** das nichtleitfähige Positionierungsmittel (4) von einem Paar von leitfähigen Belägen den einen radial (5.1) und den anderen axial (5.2) bezüglich des von einem Teil der Oberfläche des drehbaren Rings des Lagers gebildeten leitfähigen Belags (6) positioniert.

8. Vorrichtung gemäß Anspruch 7, **dadurch gekennzeichnet, dass** ein einziger Raum (7), der das dielektrische isolierende Medium ausbildet, einerseits dem Paar von Kondensatoren, die durch die beiden leitfähigen Beläge (5.1 und 5.2) ausgebildet sind, die durch das nichtleitfähige Positionierungsmittel (4) positioniert sind, und andererseits dem leitfähigen Belag (6), der durch einen Teil der Oberfläche des drehbaren Rings des Lagers ausgebildet ist, gemeinsam ist.

9. Vorrichtung gemäß einem der Ansprüche 1 bis 8, **dadurch gekennzeichnet, dass** mindestens ein nichtleitfähiges Positionierungsmittel (4) drei Paare von leitfähigen Elementen auf jeder Seite des Lagers positioniert, wobei die drei Paare in gleichem Abstand von der Rotationsachse (Z-Z) des Lagers positioniert sind, so dass in einer Ebene senkrecht zu der Rotationsachse (Z-Z) des Lagers die Ebenen, die jeweils durch die Symmetrieachsen von jedem der Paare von leitfähigen Elementen und die Rotationsachse des Lagers verlaufen, zwischen einander Winkel ($\alpha$) von 120° ausbilden, wobei jedes der drei Paare von leitfähigen Elementen ein erstes leitfähiges Element (5.1), das bezüglich des drehbaren Rings des Lagers radial positioniert ist, und ein zweites leitfähiges Element (5.2), das bezüglich des drehbaren Rings des Lagers axial positioniert ist, aufweist, um jeweils die ersten Beläge von sechs verschiedenen Kondensatoren auszubilden.

10. Vorrichtung gemäß einem der Ansprüche 1 bis 9, **dadurch gekennzeichnet, dass** das nichtleitfähige Positionierungsmittel (4) ein nichtleitfähiger Ring ist, der mit dem Ring des Lagers, der bezüglich des Maschinenrahmens ortsfest ist, einstückig ist.

11. Vorrichtung gemäß einem der Ansprüche 1 bis 10,
**dadurch gekennzeichnet, dass** die Vorrichtung mindestens ein Mittel zum Verstellen des Abstands aufweist, der die Beläge, die Teil der Ausbildung eines Kondensators sind, voneinander trennt.

12. Vorrichtung gemäß einem der Ansprüche 1 bis 11,
**dadurch gekennzeichnet, dass** die Paare von Belägen von jedem der Kondensatoren einer jeweiligen elektronischen Schaltung zugeordnet sind, die einen Ladungsverstärker bildet, der vorgesehen ist, um in Echtzeit ein Signal auszugehen, das für die Verlagerungen eines Belages (6) bezüglich des anderen aufgrund der Schwingungen während des Betriebs des mechanischen Lagers repräsentativ ist.

13. Vorrichtung gemäß Anspruch 12, **dadurch gekennzeichnet, dass** jedes Paar von Belägen einer elektronischen Schaltung zugeordnet ist, die einen Ladungsverstärker (AC) bildet, wobei der Belag (6), der durch den drehbaren Ring ausgebildet ist, mit der Masse verbunden ist, und der Belag (5), der durch das nichtleitfähige Positionierungsmittel (4) positioniert ist, durch ein abgeschirmtes Kabel (9, 9.1, 9.2) mit dem invertierenden Eingang (i) eines integrierten Linearverstärkers (ALI) mit hoher Impedanz verbunden ist, dessen Abschirmung (9.3) mit dem nicht-invertierenden Eingang des ALI verbunden ist, wobei der nicht-invertierende Eingang des ALI mit einem Generator verbunden ist, der eine Gleichspannung (V) bereitstellt, wobei der Ausgang des ALI über einen Kondensator (Cf) und einen Widerstand (R), die parallel geschaltet sind, mit seinem invertierenden Eingang verbunden ist.

14. Vorrichtung gemäß Anspruch 13, **dadurch gekennzeichnet, dass** der Ausgang des integrierten Linearverstärkers (ALI) mit dem Eingang eines Analog-Digital-Wandlers verbunden ist, dessen Ausgang von einem Mikroprozessor-Schaltkreis verwendet wird, um die Veränderung des Abstandes durch Ausführen eines Programmes zu berechnen, das die folgende Formel anwendet:

$$\Delta x = -\frac{C_f}{2.V.S_c}\Delta V_s$$

und um einen Alarm auszulösen, mittels Vergleichens des erhaltenen Ergebnisses mit einer gespeicherten Schwelle, wobei $\Delta x$ die Veränderung des Abstandes (d) repräsentiert, der die beiden Beläge des Kondensators trennt, $\Delta V_s$ die Veränderung der Spannung am Ausgang des Verstärkers repräsentiert, V den Gleichstromanteil der Spannung am Eingang des Verstärkers repräsentiert, $S_c$ die Empfindlichkeit der Kapazität repräsentiert und $C_f$ die Kapazität des Kondensators repräsentiert, der den Ausgang des ALI mit dem invertierenden Eingang verbindet.

15. Vorrichtung gemäß einem der Ansprüche 1 bis 14,
**dadurch gekennzeichnet, dass** sie ein Mittel zum Detektieren der Rotationsfrequenz des Lagers aufweist, um Messungen durchzuführen, wenn die Ringe des Lagers bezüglich einander in einer definierten Position sind.

16. Vorrichtung gemäß Anspruch 14 oder 15, **dadurch gekennzeichnet, dass** die Vorrichtung mindestens ein Mittel zur Frequenzverarbeitung des Schwingungssignals aufweist, das an den Belägen (5 und 6) des Kondensators gemessen wird, das es ermöglicht, das Schwingungssignal von mindestens einem der verschiedenen Elemente der Maschine mittels Vergleichens mit den jeweiligen Schwingungssignaturen von jedem der Elemente der Maschine, die in mindestens einem Speichermittel gespeichert sind, zu erhalten.

17. Vorrichtung gemäß Anspruch 16, **dadurch gekennzeichnet, dass** die Vorrichtung mindestens ein Mittel zur zeitlichen Verarbeitung des Schwingungssignals mindestens eines der Elemente der Maschine aufweist, das es ermöglicht, mehrere statistische Parameter des Signales zu erhalten, um mit statistischen Parametern von Fehlern verglichen zu werden, die in einem Speichermittel gespeichert sind.

18. Verfahren zum Überwachen von Schwingungen, die von einem Lager einer Maschine erzeugt werden, das durch zwei Ringe ausgebildet ist, von denen der eine ortsfest und der andere drehbar ist, mindestens einen kapazitiven Fühler aufweisend, sowie von Schwingungen, die von anderen Elementen der Maschine erzeugt werden und die über das Lager laufen, **dadurch gekennzeichnet, dass** es aufweist: mindestens einen Schritt des Messens der Ladungen, die durch kapazitive Kopplung an einem ersten leitfähigen Belag (5) eines Kondensators mit variablem Abstand induziert werden, der durch ein nichtleitfähiges Positionierungsmittel positioniert ist, das mit dem bezüglich des Rahmens ortsfesten Ring einstückig ist, wobei ein zweiter leitfähiger Belag (6), der durch einen Teil der Oberfläche des drehbaren Rings des Lagers ausgebildet ist, mit einem festen Potential ist.

19. Verfahren gemäß Anspruch 18, **dadurch gekennzeichnet, dass** das Paar von Belägen einer elektronischen Schaltung zugeordnet ist, die einen Ladungsverstärker (AC) bildet, wobei der Belag (6) durch den drehbaren Rings, der mit der Masse verbunden ist, ausgebildet ist, wobei der Belag (5) mittels des nichtleitfähigen Positionierungsmittels (4) positioniert und durch ein abgeschirmtes Kabel (9, 9.1) mit dem invertierenden Eingang (i) eines integrierten Linearverstärkers (ALI) mit hoher Impedanz verbunden ist, dessen Abschirmung (9.3) mit dem nicht-invertierenden Eingang des ALI verbunden ist, des nicht-invertierende Eingang des ALI mit einem Generator verbunden ist, des eine Gleichspannung (V) bereitstellt, wobei der Ausgang des ALI über einen Kondensator (Cf) und einen Widerstand (R), die parallel geschaltet sind, mit seinem invertierenden Eingang verbunden ist, wobei das Verfahren mindestens einen Schritt des Berechnens der Veränderung ($\Delta x$) des Abstands aufweist, der die beiden Beläge (5 und 6) des Kondensators trennt, ausgehend von der Veränderung der Spannung ($\Delta V_s$) am Ausgang eines Ladungsverstärkers (AC), durch Anwenden der folgenden Relation:

$$\Delta x = -\frac{C_f}{2.V.S_c}\Delta V_s$$

wobei $\Delta x$ die Veränderung des Abstands (d) repräsentiert, der die beiden Beläge des Kondensators trennt, $\Delta V_s$ die Veränderung der Spannung am Ausgang des Verstärkers repräsentiert, V den Gleichstromanteil der Spannung am Eingang des Verstärkers repräsentiert, $S_c$ die Empfindlichkeit der Kapazität repräsentiert, und $C_f$ die Kapazität des Kondensators repräsentiert, der den Ausgang des ALI mit dem invertierenden Eingang verbindet.

20. Verfahren gemäß Anspruch 18 oder 19, **dadurch gekennzeichnet, dass** der Ausgang des integrierten Linearverstärkers (ALI) mit dem Eingang eines Analog-Digital-Wandlers (CAN) verbunden ist, dessen Ausgang von einem Mikroprozessor-Schaltkreis (MP) verwendet wird, um die Abstandsveränderung durch Ausführen eines Programms (Prog) zu berechnen, wobei das Verfahren mindestens einen Schritt des Auslösens eines Alarms nach dem Vergleichen der Veränderung ($\Delta x$) des Abstands zwischen den beiden Belägen mit einem Schwellenwert aufweist.

21. Verfahren gemäß einem der Ansprüche 18 bis 20, **dadurch gekennzeichnet, dass** die Vorrichtung ein Mittel zum Speichern der Schwingungssignatur von jedem der Elemente der Maschine aufweist und das Verfahren mindestens aufweist:

- einen Schritt des Messens des Schwingungssignals an den Belägen (5 und 6) des Kondensators, der an dem Lager positioniert ist,
- einen Schritt des Vergleichens des gemessenen Schwingungssignals mit der gespeicherten Schwingungssignatur mindestens eines definierten Elements der Maschine,
- einen Schritt des Ermittelns und anschließende Extrahierens des Schwingungssignals, das zu dem definierten Element der Maschine gehört, aus dem gemessenen Schwingungssignal.

**22.** Verfahren gemäß einem der Ansprüche 18 bis 21, **dadurch gekennzeichnet, dass** die Vorrichtung ein Mittel zum Speichern von Fehler-Schwellenwerten mehrerer statistischer Parameter aufweist und das "Verfahren mindestens aufweist:

- einen Schritt des Messens des Schwingungssignals an den Belägen (5 und 6) des an dem Lager positionierten Kondensators,
- einen Schritt des Berechnens von statistischen Parametern des gemessenen Schwingungssignals,
- einen Schritt des Vergleichens der berechneten statistischen Parameter mit gespeicherten Fehler-Schwellenwerten,
- einen Schritt des Bestimmens der Bedeutung des Fehlers.

**23.** Verfahren gemäß einem der Ansprüche 18 bis 22, **dadurch gekennzeichnet, dass** die Vorrichtung mindestens ein Anzeigemittel aufweist und das Verfahren mindestens einen Schritt des Anzeigens der Position und der Bedeutung eines Fehlers aufweist.

Fig.1

Z-Z

Fig.3

Fig.2a

Fig.2b

Fig.4